# FASCICULE DE BREVET EUROPEEN

(11) **EP 1 495 356 B1**
(45) Date de publication et mention de la délivrance du brevet: **10.08.2005**
(21) Numéro de dépôt: 03738204.1
(22) Date de dépôt: 27.03.2003
(51) Int. Cl.: G02C 5/22

(54) **CHARNIERE ELASTIQUE POUR LUNETTES COMPRENANT UNE BUTEE RADIALE DE SUR-OUVERTURE DE BRANCHE**
FEDERSCHARNIER FÜR EINE BRILLE MIT EINEM RADIALANSCHLAG ZUM SCHUTZ VOR ZU WEITER ÖFFNUNG DES BRILLENBÜGELS
ELASTIC SPECTACLE HINGE COMPRISING A RADIAL STOP AGAINST OPENING TOO FAR THE TEMPLE

(30) Priorité: 12.04.2002 FR 0204568
(43) Date de publication de la demande: 12.01.2005
(73) Titulaire: Comotec, 39220 Les Rousses (FR)
(72) Inventeur: QUEHIN, Sebastien Claude, F-39400 Morez (FR)
(74) Mandataire: Marchand, André
(86) Numéro de dépôt international: PCT/FR2003/000961
(87) Numéro de publication internationale: WO 2003/087917

(56) Documents cités:
- EP-A- 0 239 010
- EP-A- 0 889 347
- EP-A- 1 146 381
- WO-A-98/44379
- DE-A- 19 607 362
- FR-A- 2 334 808

## Description

La présente invention concerne le domaine de la lunetterie et plus particulièrement les charnières pour monture de lunettes.

La présente invention concerne plus particulièrement une charnière élastique, notamment pour monture de lunette, comprenant deux éléments de charnière montés rotatifs autour d'un pivot, un profil de came solidaire du premier élément de charnière, une pièce d'appui montée mobile dans le deuxième élément de charnière selon un axe de translation élastique, présentant une première zone de contact pour coopérer de façon élastique avec le profil de came et conférer à la charnière au moins une position stable, et des moyens de blocage de la charnière lorsqu'une position de sur-ouverture est atteinte.

La présente invention concerne notamment la réalisation, dans une charnière du type précité, des moyens de blocage de la charnière lorsque la position de sur-ouverture est atteinte.

Il est classique de réaliser des charnières de monture de lunettes présentant deux positions stables grâce à une pièce d'appui coopérant de façon élastique avec un profil de came. Une position stable de la charnière correspond à la position fermée et l'autre correspond à la position ouverte des branches de la monture. Il est également classique de prévoir des moyens de blocage de la charnière lorsqu'une position dite de sur-ouverture est atteinte. La position de sur-ouverture correspond à la position ouverte des branches de lunettes à laquelle on ajoute un angle d'ouverture supplémentaire, ou angle de sur-ouverture.

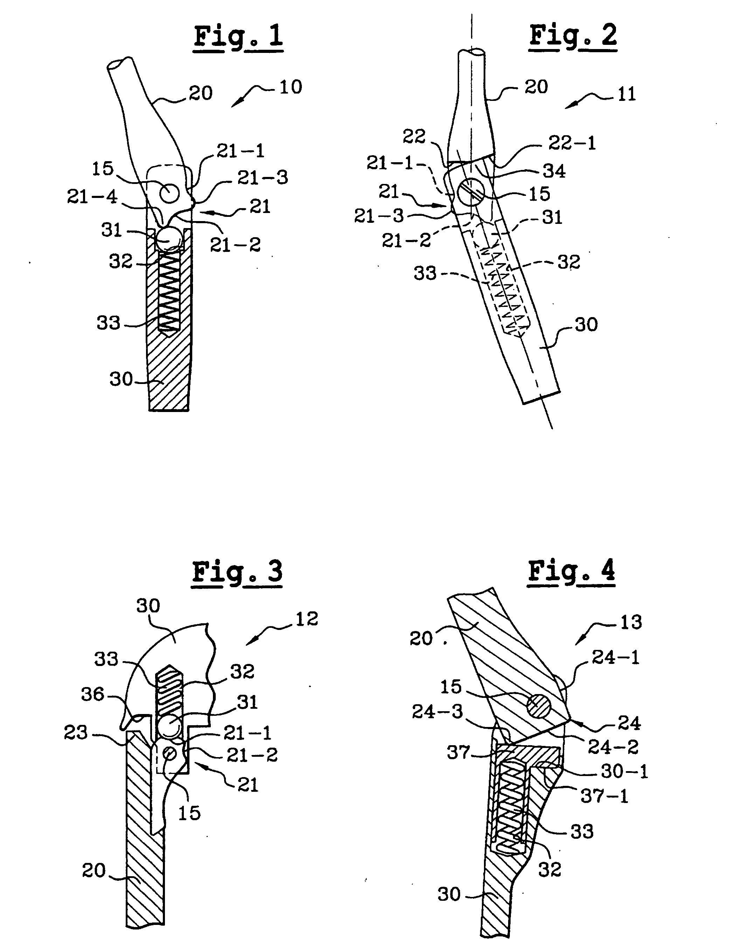

A titre de rappel, les figures 1, 2, 3 et 4 représentent diverses charnières élastiques classiques équipées d'une butée de sur-ouverture.

La charnière 10 représentée en figure 1, décrite par EP 992 831, comprend deux éléments de charnière 20, 30, un pivot 15 traversant les deux éléments de charnière, une bille 31 montée coulissante dans une cavité cylindrique 32 pratiquée dans le deuxième élément de charnière, et un profil de came 21 pratiqué à l'extrémité proximale du premier élément de charnière. Un ressort à spires 33 agencé dans la cavité 32 pousse la bille 31 contre le profil de came 21. Celui-ci présente deux creux 21-1, 21-2 séparés par une bosse 21-3 pour conférer respectivement une position stable fermée et une position stable ouverte à la charnière. Le profil de came comprend également une excroissance 21-4 qui, lorsque la charnière est ouverte au-delà de la position définie par le creux 21-2, pousse la bille dans la cavité 32 jusqu'à ce que celle-ci atteigne une butée arrière de translation. La butée arrière de translation est obtenue ici par une diminution du diamètre de la cavité cylindrique, formant un épaulement empêchant la bille de s'engager dans la partie inférieure de la cavité, où se trouve le ressort. Une autre manière d'obtenir une butée arrière de translation consiste à faire en sorte que le ressort atteigne un état de compression maximale bloquant la translation de la bille dans la cavité (butée dite à spires jointives). La bille 31 étant bloquée, l'excroissance 21-4 du profil de came se trouve elle-même bloquée contre la bille et la charnière ne peut s'ouvrir au-delà de la position de sur-ouverture ainsi déterminée.

La charnière 11 représentée en figure 2, décrite par EP 889 347, comprend les éléments mentionnés ci-dessus, désignés par les mêmes références. On distingue ainsi deux éléments de charnière 20, 30, un pivot 15, une bille 31 montée coulissante dans une cavité 32 pratiquée dans le deuxième élément de charnière 30, un ressort à spires 33 et un profil de came 21 pratiqué sur le premier élément de charnière 20. Le profil de came comprend également deux creux 21-1, 21-2 séparés par une bosse 21-3 pour l'obtention des deux positions stables précitées. L'enveloppe extérieure du deuxième élément de charnière comprend deux lèvres 34, 35 entre lesquelles le profil de came 21 est agencé (seule la lèvre 34 étant visible sur la figure). L'enveloppe extérieure du premier élément de charnière comprend un épaulement 22 en forme de "V" agencé en regard de l'extrémité de la lèvre 34. Le blocage de la charnière en position de sur-ouverture est obtenu ici par le fait que l'extrémité de la lèvre 34 vient buter contre une aile 22-1 de l'épaulement 22, comme cela apparaît sur la figure.

La charnière 12 représentée en figure 3, décrite par EP 266 307, comprend les éléments décrits ci-dessus, désignés par les mêmes références. Le blocage de la charnière en position de sur-ouverture est obtenu ici par le fait que l'enveloppe du premier élément de charnière 20 comprend une excroissance 23 qui coopère avec une cavité 36 prévue dans le second élément de charnière 30. L'extrémité de l'excroissance 23 est plate et vient buter contre une paroi plate se trouvant au fond de la cavité 36, lorsque la position de sur-ouverture est atteinte.

La charnière 13 représentée en figure 4, décrite par WO 01/79917, comprend deux éléments de charnière 20, 30, un pivot 15, un piston 37 à tête plate monté coulissant dans une cavité 32 pratiquée dans le deuxième élément de charnière 30, et un profil de came 24 prévu à l'extrémité proximale du premier élément de charnière 20. Un ressort à spires 33 agencé dans la cavité 32 pousse le piston 37 contre le profil de came 24. Celui-ci présente deux faces plates 24-1, 24-2 coopérant avec la tête plate du piston pour l'obtention des deux positions stables précitées, et un congé 24-3. En position de sur-ouverture, le congé 24-3 vient se bloquer contre la tête du piston 37 qui se trouve en butée arrière de translation. La butée arrière de translation est obtenue ici par le fait qu'une face inférieure 37-1 de la tête de piston vient buter contre une face interne correspondante 30-1 de l'élément de charnière 30..

En définitive, on distingue dans l'art antérieur deux types de butées de sur-ouverture.

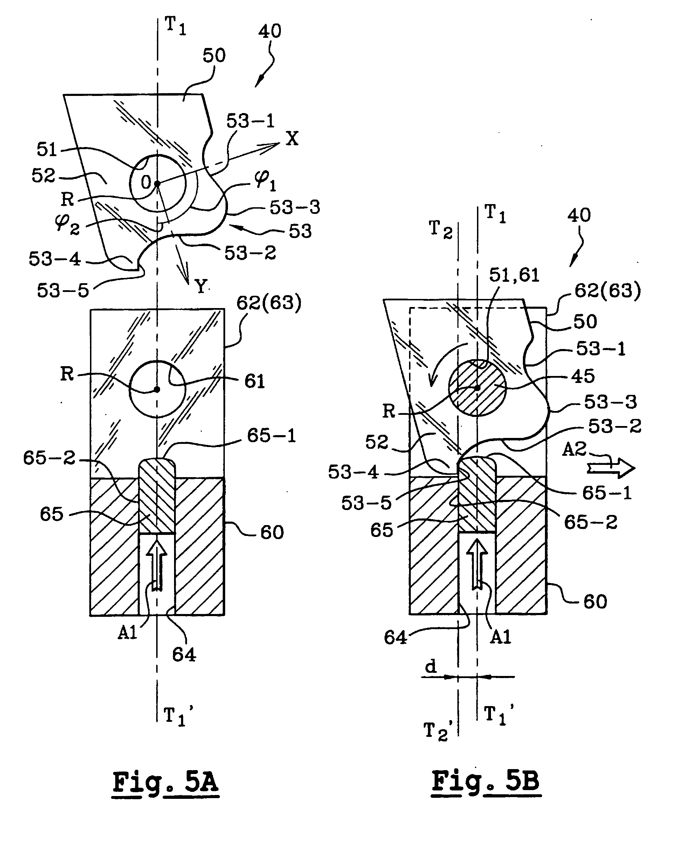

Les butées du premier type, ou butées dites axiales, sont mises en oeuvre dans les charnières représentées en figures 1 et 4. Elles consistent en un blocage du système came/pièce d'appui, la pièce d'appui étant une bille ou un piston, et nécessitent la prévision d'une butée arrière de translation pour bloquer la pièce d'appui.

Les butées du deuxième type, ou butées dites radiales, font intervenir des surfaces de contact spécifiques prévues sur les enveloppes externes des éléments de charnière, comme cela est le cas dans les charnières représentées en figures 2 et 3. Dans ce cas, le système came/pièce d'appui assure uniquement l'obtention des deux positions stables et n'intervient pas dans le blocage de la charnière.

Les butées axiales présentent l'inconvénient qu'en position de sur-ouverture, les zones en contact de la pièce d'appui et du profil de came sont assez réduites. Une forte pression s'exerce ainsi sur les zones de contact lorsque l'utilisateur tente de tirer la branche de la lunette au-delà de la position de sur-ouverture. Cette pression élevée est susceptible d'endommager le profil de came.

Inversement, les butées radiales permettent de mettre en contact deux surfaces plates, comme on le voit sur les figures 2 et 3, d'où une meilleure répartition de la force de sur-ouverture et une pression plus faible s'exerçant sur les surfaces en contact. De plus l'effort de sur-ouverture ne s'exerce pas sur les zones de contact de la pièce d'appui et du profil de came. Les butées radiales présentent en contrepartie un inconvénient d'ordre esthétique, par le fait que les surfaces formant butée sont apparentes sur les éléments de charnière et difficiles à dissimuler. Les butées radiales limitent donc les possibilités de concevoir des charnières d'un aspect extérieur lisse et esthétique, ce qui constitue un inconvénient dans le domaine de la lunetterie où l'esthétique est d'une grande importance.

Ainsi, la présente invention vise à prévoir une charnière élastique présentant une butée de sur-ouverture qui permette de bien répartir la force de sur-ouverture sur les surfaces en contact, tout en pouvant être dissimulée dans le mécanisme de la charnière et n'être ainsi pas visible de l'extérieur.

Cet objectif est atteint par la prévision d'une charnière élastique, notamment pour monture de lunette, comprenant deux éléments de charnière montés rotatifs autour d'un pivot, un profil de came solidaire du premier élément de charnière, une pièce d'appui montée mobile dans le deuxième élément de charnière selon un axe de translation élastique, présentant une première zone de contact pour coopérer de façon élastique avec le profil de came et conférer à la charnière au moins une position stable, et des moyens de blocage de la charnière lorsqu'une position de sur-ouverture est atteinte, dans laquelle les moyens de blocage de la charnière comprennent une excroissance du profil de came agencée pour coopérer avec une deuxième zone de contact de la pièce d'appui en exerçant essentiellement sur la pièce d'appui une force perpendiculaire à son axe de translation élastique, l'excroissance du profil de came formant avec la deuxième zone de contact de la pièce d'appui une butée de sur-ouverture.

Selon un mode de réalisation, la charnière ne comprend pas de butée arrière de translation agissant sur la pièce d'appui lorsque la position de sur-ouverture est atteinte.

Selon un mode de réalisation, l'excroissance du profil de came présente un bord plat coopérant avec la deuxième zone de contact de la pièce d'appui lorsque la position de sur-ouverture est atteinte.

Selon un mode de réalisation, la pièce d'appui présente une paroi cylindrique coopérant avec l'excroissance du profil de came lorsque la position de sur-ouverture est atteinte.

Selon un mode de réalisation, la pièce d'appui présente une extrémité proximale de profil circulaire ou sphérique formant la première zone de contact qui coopère avec le profil de came pour conférer à la charnière au moins une position stable.

Selon un mode de réalisation, la pièce d'appui est un piston monté en translation dans une cavité cylindrique pratiquée dans le deuxième élément de charnière.

Selon un mode de réalisation, le piston comprend une première partie cylindrique dont les bords coopèrent avec l'excroissance du profil de came pour former la butée de sur-ouverture, et dont l'extrémité coopère avec le profil de came pour conférer à la charnière au moins une position stable.

Selon un mode de réalisation, le piston comprend une deuxième partie cylindrique de diamètre supérieur à celui de la première partie cylindrique, qui coopère avec les parois de la cavité cylindrique pour assurer le coulissement et l'emprisonnement du piston.

Selon un mode de réalisation, le piston se prolonge par un axe de piston autour duquel est agencé un ressort à spires qui pousse le piston vers le profil de came.

Selon un mode de réalisation, la cavité cylindrique pratiquée dans le deuxième élément de charnière présente une première section d'un premier diamètre supérieur à celui du piston et une deuxième section d'un second diamètre inférieur à celui du piston, le piston étant monté coulissant dans la première section, la deuxième section débouchant à l'extrémité proximale du deuxième élément de charnière, et l'extrémité proximale du deuxième élément de charnière comprend au moins une fente faisant apparaître au moins deux lèvres.

Selon un mode de réalisation, le premier et le second diamètres et les longueurs des lèvres sont déterminés de manière à permettre la mise en oeuvre d'un procédé d'insertion du piston dans la première section, comprenant l'étape consistant à forcer le piston à pénétrer dans la deuxième section avec écartement des lèvres, et à pousser le piston jusqu'à la première section, le piston se trouvant prisonnier dans la première section lorsque les lèvres retrouvent leur écartement initial.

Selon un mode de réalisation, le pivot traverse les lèvres du deuxième élément de charnière.

Selon un mode de réalisation, le premier élément de charnière comprend une extrémité proximale amincie qui porte le profil de came et est logée entre les lèvres du deuxième élément de charnière.

Selon un mode de réalisation, le profil de came présente deux creux pour conférer à la charnière deux positions stables par coopération avec la première zone de contact de la pièce d'appui.

La présente invention concerne également une monture de lunette comprenant un cadre et au moins une branche, dans laquelle la branche est articulée sur le cadre au moyen d'une charnière selon l'invention, le premier élément de charnière étant solidaire du cadre et le second élément de charnière solidaire de la branche, ou vice-versa.

Ces objets, caractéristiques et avantages ainsi que d'autres de la présente invention seront exposés plus en détail dans la description suivante d'une charnière élastique selon l'invention, en relation avec les figures jointes parmi lesquelles :
- les figures 1, 2, 3 et 4 précédemment décrites représentent des charnières élastiques classiques équipées d'une butée de sur-ouverture,
- les figures 5A et 5B représentent, respectivement par une vue éclatée et une vue assemblée, un mode de réalisation simplifié d'une charnière selon l'invention,
- les figures 6 et 7 représentent, respectivement par une vue en perspective et par une vue en coupe, un mode de réalisation préféré d'une charnière selon l'invention,
- la figure 8 représente une pièce d'appui en forme de piston présente dans la charnière selon l'invention,
- la figure 9 est une vue en coupe d'une partie de la charnière selon l'invention, et
- la figure 10 est une vue en coupe d'une cavité recevant la pièce d'appui de la figure 8.

Les figures 5A et 5B représentent un mode de réalisation simplifié d'une charnière élastique 40 selon l'invention, illustrant le principe de l'invention. La charnière 40 comprend un élément de charnière mâle 50, et un élément de charnière femelle 60. La figure 5A est une vue éclatée de la charnière montrant les éléments de charnière 50, 60 avant assemblage et la figure 5B montre les éléments 50, 60 assemblés au moyen d'un pivot 45. Sur ces figures, l'élément 60 est représenté selon un plan de coupe perpendiculaire au pivot 45.

Le pivot 45 traverse des charnons 51, 61 (orifices d'articulation) pratiqués dans les éléments 50, 60. Chaque charnon 51, 61 présente un centre coïncidant avec un axe mathématique R passant par le centre du pivot 45, l'axe R représentant l'axe de rotation de la charnière.

L'élément 50 comprend une extrémité proximale 52 dont le contour forme un profil de came 53. Le profil de came 53 présente un premier creux 53-1 et un second creux 53-2 séparés par une bosse 53-3, ainsi qu'une excroissance 53-4 selon l'invention. En prenant comme point de référence un point O sur l'axe de rotation R, le premier creux 53-1 est orienté selon une normale OX de direction X perpendiculaire à l'axe R et le second creux 53-2 est orienté selon une normale OY de direction Y perpendiculaire à l'axe R. La normale OY présente un angle ϕ1 par rapport à la normale OX, ici un angle de 90°.

L'extrémité proximale de l'élément 60 présente une fente faisant apparaître deux lèvres 62, 63, seule la lèvre 62 étant visible sur la vue en coupe des figures 5A, 5B. Lorsque la charnière 40 est assemblée, comme représenté en figure 5B, le profil de came 53 de l'élément 50 se trouve agencé entre les lèvres 62, 63 de l'élément 60.

L'élément 60 comprend une cavité 64 à parois parallèles, par exemple une cavité cylindrique, dans laquelle une pièce d'appui 65 est montée coulissante selon un axe de translation T1-T1' passant par l'axe de rotation R. La pièce d'appui 65 est poussée contre le profil de came 53 par un moyen élastique Al schématisé ici par une flèche. Elle présente une extrémité 65-1 convexe présentant un rayon de courbure destiné à coopérer avec les rayons de courbure des creux 53-1, 53-2 du profil de came, les rayons de courbures n'étant pas nécessairement égaux. Dans le sens longitudinal, la pièce d'appui 65 présente une paroi latérale 65-2 parallèle à l'axe de translation T1-T1'.

L'excroissance 53-4 du profil de came selon l'invention présente un bord 53-5 prévu pour coopérer avec la paroi latérale 65-2 de la pièce d'appui, d'une manière qui sera décrite plus loin.

La charnière élastique selon l'invention présente une première position stable lorsque la normale OX est alignée avec l'axe de translation T1-T1'. Dans cette position, correspondant à la position fermée d'une branche de monture de lunettes, l'extrémité 65-1 de la pièce d'appui 65 coopère avec le creux 53-1 du profil de came et assure la stabilité de la position fermée.

Lorsque les éléments 50, 60 pivotent l'un relativement à l'autre d'un angle égal à ϕ1, la bosse 53-3 du profil de came repousse tout d'abord la pièce d'appui 65 dans la cavité 64, à l'encontre de la force élastique Al (phase de résistance élastique), puis la pièce d'appui vient se loger dans le creux 53-2 (phase de relaxation élastique) en conférant à la charnière une deuxième position stable correspondant à la position ouverte.

Lorsque la charnière pivote d'un angle ϕ2 au-delà de la position ouverte, la charnière atteint une position de sur-ouverture représentée sur la figure 5B. Dans cette position, le bord 53-5 de l'excroissance 53-4 du profil de came se trouve en butée contre la paroi latérale 65-2 de la pièce d'appui 65. Plus particulièrement, dans la position de sur-ouverture, le bord 53-5 est aligné avec un axe T2-T2' qui est ici parallèle à l'axe de translation T1-T1' de la pièce d'appui. La distance entre l'axe T2-T2' et l'axe T1-T1' est égale à la demi-largeur de la pièce d'appui, soit le demi-diamètre de la pièce d'appui si celle-ci est cylindrique. La charnière se trouve ainsi en butée de sur-ouverture et l'excroissance 53-4 du profil de came exerce sur la pièce d'appui 65 une force essentiellement perpendiculaire à l'axe de translation T1-T1', comme représenté par une flèche A2 en figure 5B. L'angle entre la normale OY et l'axe T1-T1' est alors égal à l'angle de sur-ouverture ϕ2.

Ainsi, selon l'invention, une butée de sur-ouverture est obtenue en faisant coopérer le profil de came 53 et la pièce d'appui 65 dans une direction perpendiculaire à l'axe de translation T1-T1' de la pièce d'appui, c'est-à-dire perpendiculairement à la force élastique A1 s'exerçant sur la pièce d'appui. Il n'est donc pas nécessaire de prévoir une butée arrière de translation pour bloquer la pièce d'appui lorsque la position de sur-ouverture est atteinte, car celle-ci n'est pas sollicitée en translation par le profil de came.

En d'autres termes, la butée de sur-ouverture selon l'invention est une butée radiale n'utilisant pas des moyens externes agencés sur les enveloppes des éléments de charnière, mais utilisant la pièce d'appui et le profil de came comme moyens de blocage, à l'instar des butées axiales.

En pratique, l'invention permet d'obtenir une bonne répartition de la force de sur-ouverture en mettant en contact deux zones non ponctuelles, de sorte que la force s'exerçant sur les zones en contact peut être convenablement répartie pour l'obtention d'une pression limitée. Les zones en contact sont ici le bord 53-5 de l'excroissance 53-4 du profil de came et une zone de la paroi latérale 65-2 de la pièce d'appui. Le bord 53-5 peut être plat et la paroi latérale 65-5 de la pièce d'appui peut être cylindrique. Dans ce cas, le bord 53-5 touche la paroi latérale 65-5 de façon tangentielle et la zone de contact mutuelle théorique est une ligne. En cas d'usure ou d'écrasement, cette zone de contact mutuelle a tendance à s'agrandir d'où une meilleure répartition de la pression.

D'autre part une usure ou un écrasement éventuel des zones en contact 53-5, 65-2 n'affecte pas l'extrémité 65-1 de la pièce d'appui, qui coopère avec le profil de came pour l'obtention des deux positions stables, à l'inverse des butées axiales représentées en figures 1 et 4.

Encore un autre avantage de la présente invention est qu'un angle de sur-ouverture ϕ2 précis peut être obtenu tout en garantissant une faible dispersion angulaire. Cet avantage ne se retrouve pas dans les butées axiales à bille et à spires jointives, qui représentent une majorité des charnières élastiques dans le commerce. En effet les tolérances de fabrication des ressorts sont telles qu'il existe une dispersion non négligeable dans les longueurs des ressorts lorsqu'ils se trouvent en compression maximale.

Les zones en contact en position de sur-ouverture sont bien entendu susceptibles de variantes de réalisation. Par exemple, la paroi latérale 65-2 de la pièce d'appui peut présenter un profil complexe (ondulations, dents de scie...) dans la zone coopérant en butée avec le bord 53-5 de l'excroissance du profil de came. Dans ce cas le bord 53-5 présente un profil correspondant, pour une bonne répartition de la force d'appui sur le profil complexe. D'autre part la pièce d'appui peut être de section carrée, ovale,... au lieu d'être cylindrique.

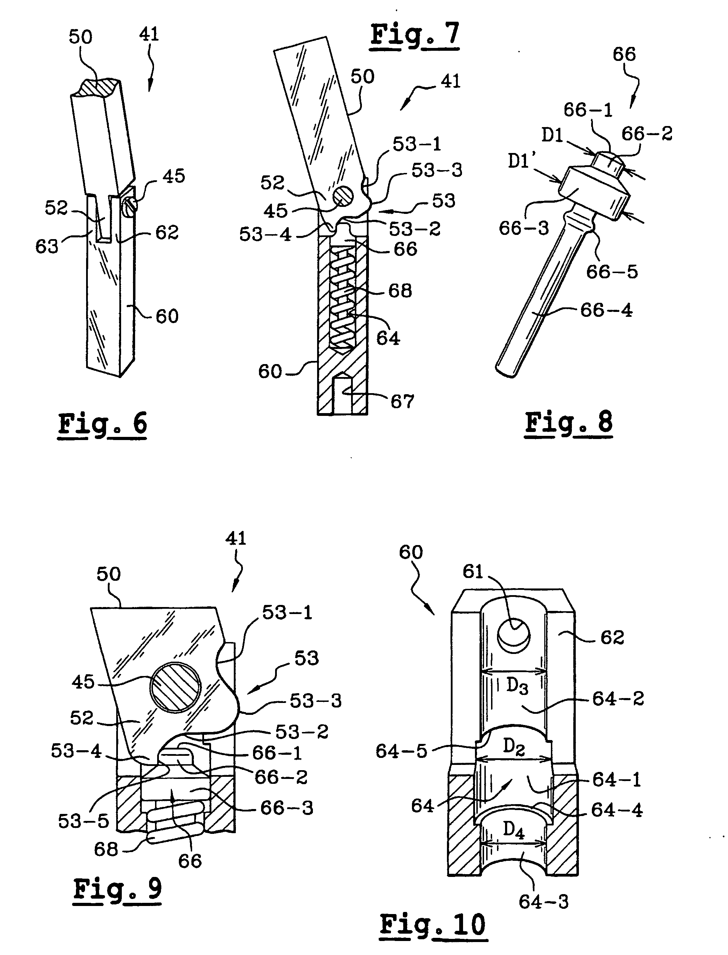

Toutefois, en l'état actuel des études conduites par la demanderesse, la réalisation d'une pièce d'appui de forme cylindrique apparaît comme la solution la plus simple et la plus économique pour la mise en oeuvre de l'invention. Ceci apparaîtra à la lecture de la description ci-après d'un mode de réalisation préféré d'une charnière 41 selon l'invention, en relation avec les figures 6 à 10.

Sur les figures 6 à 10, les références des éléments décrits ci-dessus sont conservées hormis celle de la pièce d'appui, désigné maintenant par la référence 66.

La figure 6 montre la charnière 41 vue de l'extérieur et en perspective. On aperçoit la forme externe de l'élément 50 et celle de l'élément 60, ainsi que les lèvres 62, 63 de l'élément 60, qui reçoivent l'extrémité proximale 52 de l'élément 50, portant le profil de came. La butée de sur-ouverture n'est pas visible et la forme extérieure des éléments 50, 60 peut faire l'objet de diverses variantes au plan esthétique. Le pivot 45 est ici une vis traversant la lèvre 62, l'élément 50 et la lèvre 63. La vis coopère avec un filetage ou avec un écrou prévu dans le charnon de la lèvre 63.

La figure 7 représente la charnière 41 en coupe selon un plan perpendiculaire au pivot 45. A l'extrémité distale de l'élément 60, on distingue une cavité 67 permettant le montage d'une branche de monture de lunettes (non représentée), l'élément 50 étant fixé au cadre de la monture (non représenté). Un agencement inverse peut également être prévu, l'élément 50 étant alors solidaire de la branche et l'élément 60 solidaire du cadre de la monture. La cavité 64 pratiquée dans l'élément 60 reçoit une pièce d'appui cylindrique en forme de piston 66, qui est poussé contre le profil de came 53 par un ressort à spires 68.

La forme du piston 66 apparaît plus clairement sur la figure 8. Le piston comprend une tête sphérique 66-1 (portion de sphère) agencée à l'extrémité d'une partie cylindrique 66-2 de diamètre D1. La partie cylindrique 66-2 forme le prolongement d'une partie cylindrique 66-3 de diamètre D1' supérieur à D1, qui coopère avec les parois de la cavité 64 pour assurer le coulissement du piston. A l'arrière du piston 66 se trouve un axe de piston 66-4 autour duquel est agencé le ressort 68, un liseré 65-5 prévu sur l'axe 66-4 permettant de fixer l'extrémité du ressort par "clipsage".

La figure 9 est une vue dilatée de la zone de coopération du piston 66 et du profil de came 53, selon le même plan de coupe que la figure 7. Le profil de came 53 est identique à celui décrit plus haut en relation avec les figures 5A, 5B, et la charnière est représentée en position de sur-ouverture. On voit que le bord 53-5 de l'excroissance 53-4 du profil de came vient buter contre la paroi cylindrique de la partie 66-2 du piston. Par ailleurs, on voit également que la tête sphérique 66-1 du piston est destinée à coopérer avec les creux 53-1, 53-2 et la bosse 53-3 du profil de came.

L'agencement du piston dans la cavité 64 est assuré ici par un procédé d'emboîtement élastique décrit par la demande WO 01/79917, mis en oeuvre grâce à une forme particulière de la cavité 64 apparaissant en figure 10. La figure 10 représente l'élément 60 selon le même plan de coupe que les figures 7 et 9. On distingue la cavité 64, la lèvre 62 et le charnon 61 pratiqué dans la lèvre 62. La cavité 64 comprend une première section 64-1 de diamètre D2 destinée à recevoir la partie 66-3 de plus grand diamètre du piston 66, D2 étant ainsi sensiblement supérieur à D1'. Au voisinage de la partie proximale de l'élément 60, et sensiblement après le commencement de la lèvre 62, la cavité 64 se resserre et présente une deuxième section 64-2 d'un diamètre D3 sensiblement inférieur au diamètre D1' et sensiblement supérieur au diamètre D1, qui s'étend jusqu'à l'extrémité de l'élément 60. D'autre part, une section 64-3 de diamètre D4 est prévue à l'autre extrémité de la cavité, pour recevoir le ressort 68 et l'axe du piston 64-4.

Le piston est introduit dans la section 64-1 par l'intermédiaire de la section 64-2 de faible diamètre. Après insertion de l'axe du piston et du ressort, la face arrière du piston est présentée devant l'orifice formé par la section 64-2 et est introduit de force dans celle-ci. L'introduction en force du piston provoque l'écartement des lèvres 62, 63 et l'augmentation du diamètre D3 de la section 64-2. Lorsque le piston atteint la section 64-1 de plus fort diamètre, les lèvres se resserrent et la section 64-2 retrouve son diamètre initial D3. Le piston se trouve alors emprisonné dans la section 64-1, entre un épaulement arrière 64-4 dû à la différence de diamètre entre la section 64-1 et la section 64-3 et un épaulement avant 64-5 dû à la différence de diamètre entre la section 64-1 et la section 64-2.

Il sera noté que la prévision d'un piston à tête sphérique est un aspect optionnel mais avantageux de l'invention. La tête sphérique du piston, coopérant avec le profil de came pour l'obtention de l'effet bistable, apporte les mêmes avantages qu'une pièce d'appui en forme de bille, en termes de confort d'utilisation. D'autre part, le corps cylindrique du piston selon l'invention apporte les avantages classiques des pièces d'appui en forme de piston, en termes de symétrie du mécanisme et de guidage de la pièce d'appui. On bénéficie également d'une meilleure stabilité de la "bille" (soit ici la tête sphérique du piston) grâce à longueur axiale du piston.

## Revendications

1. Charnière élastique (40, 41), notamment pour monture de lunette, comprenant :
- deux éléments de charnière (50, 60) montés rotatifs autour d'un pivot (45),
- un profil de came (53) solidaire du premier élément de charnière (50),
- une pièce d'appui (65, 66) montée mobile dans le deuxième élément de charnière (60) selon un axe de translation élastique (T1-T1'), présentant une première zone de contact (65-1, 66-1) pour coopérer de façon élastique avec le profil de came (53) et conférer à la charnière au moins une position stable, et
- des moyens de blocage de la charnière lorsqu'une position de sur-ouverture est atteinte,
**caractérisée en ce que** les moyens de blocage de la charnière comprennent une excroissance (53-4) du profil de came agencée pour coopérer avec une deuxième zone de contact (65-2, 66-2) de la pièce d'appui en exerçant essentiellement sur la pièce d'appui une force (A2) perpendiculaire à son axe de translation élastique (T1-T1'), l'excroissance (53-4) du profil de came formant avec la deuxième zone de contact (65-2, 66-2) de la pièce d'appui une butée de sur-ouverture.

2. Charnière selon la revendication 1, ne comprenant pas de butée arrière de translation agissant sur la pièce d'appui (65, 66) lorsque la position de sur-ouverture est atteinte.

3. Charnière selon l'une des revendications 1 et 2, dans laquelle l'excroissance (53-4) du profil de came présente un bord plat (53-4) coopérant avec la deuxième zone de contact (65-2, 66-2) de la pièce d'appui (65, 66) lorsque la position de sur-ouverture est atteinte.

4. Charnière selon l'une des revendications 1 à 3, dans laquelle la pièce d'appui (65, 66) présente une paroi cylindrique (65-2, 66-2) coopérant avec l'excroissance (53-4) du profil de came lorsque la position de sur-ouverture est atteinte.

5. Charnière selon la revendication 4, dans laquelle la pièce d'appui (66) présente une extrémité proximale (66-1) de profil circulaire ou sphérique formant la première zone de contact qui coopère avec le profil de came (53) pour conférer à la charnière au moins une position stable.

6. Charnière (41) selon l'une des revendications 1 à 5, dans laquelle la pièce d'appui (66) est un piston monté en translation dans une cavité cylindrique (64) pratiquée dans le deuxième élément de charnière (60).

7. Charnière selon la revendication 6, dans laquelle le piston comprend une première partie cylindrique (66-2) dont les bords coopèrent avec l'excroissance (53-4) du profil de came pour former la butée de sur-ouverture, et dont l'extrémité coopère avec le profil de came pour conférer à la charnière au moins une position stable.

8. Charnière selon la revendication 7, dans laquelle le piston comprend une deuxième partie cylindrique (66-3) de diamètre (D1') supérieur à celui (D1) de la première partie cylindrique, qui coopère avec les parois de la cavité cylindrique (64) pour assurer le coulissement et l'emprisonnement du piston.

9. Charnière selon l'une des revendications 6 à 8, dans laquelle le piston se prolonge par un axe de piston (66-4) autour duquel est agencé un ressort à spires (68) qui pousse le piston vers le profil de came.

10. Charnière selon l'une des revendications 6 à 9, dans laquelle :
- la cavité cylindrique (64) pratiquée dans le deuxième élément de charnière (60) présente une première section (64-1) d'un premier diamètre (D2) supérieur à celui (D1') du piston et une deuxième section (64-2) d'un second diamètre (D3) inférieur à celui (D1') du piston, le piston étant monté coulissant dans la première section (64-1), la deuxième section (64-2) débouchant à l'extrémité proximale du deuxième élément de charnière (60), et
- l'extrémité proximale du deuxième élément de charnière (60) comprend au moins une fente faisant apparaître au moins deux lèvres (62, 63).

11. Charnière selon la revendication 10, dans laquelle le premier (D2) et le second (D3) diamètres et les longueurs des lèvres (62, 63) sont déterminés de manière à permettre la mise en oeuvre d'un procédé d'insertion du piston dans la première section (64-1), comprenant l'étape consistant à forcer le piston à pénétrer dans la deuxième section (64-2) avec écartement des lèvres, et à pousser le piston jusqu'à la première section (64-1), le piston se trouvant prisonnier dans la première section (64-1) lorsque les lèvres (62, 63) retrouvent leur écartement initial.

12. Charnière selon l'une des revendications 10 et 11, dans laquelle le pivot (45) traverse les lèvres (62, 63) du deuxième élément de charnière (60).

13. Charnière selon la revendication 12, dans laquelle le premier élément de charnière (50) comprend une extrémité proximale amincie (52) qui porte le profil de came et est logée entre les lèvres (62, 63) du deuxième élément de charnière.

14. Charnière selon l'une des revendications 1 à 13, dans laquelle le profil de came présente deux creux (53-1, 53-2) pour conférer à la charnière deux positions stables par coopération avec la première zone de contact (65-1, 66-1) de la pièce d'appui.

15. Monture de lunette comprenant un cadre et au moins une branche, **caractérisé en ce que** la branche est articulée sur le cadre au moyen d'une charnière (40, 41) selon l'une des revendications 1 à 14, le premier élément de charnière (50) étant solidaire du cadre et le second élément de charnière (60) solidaire de la branche, ou vice-versa.

## Patentansprüche

1. Elastisches Scharnier (40, 41), insbesondere für ein Brillengestell, mit:
- zwei Scharnierelementen (50, 60), welche um einen Drehzapfen (45) drehbar montiert sind,
- einem Nockenprofil (53), welches mit dem ersten Scharnierelement (50) fest verbunden ist,
- einem Abstützteil (65, 66), welches beweglich in dem zweiten Scharnierelement (60) entlang einer elastischen Translationsachse (T1-T1') montiert ist und eine erste Kontaktzone (65-1, 66-1) aufweist, um mit dem Nockenprofil (53) elastisch zusammenzuwirken und dem Scharnier mindestens eine stabile Position zu verleihen, und
- Mitteln, um das Scharnier zu blockieren, wenn eine übermäßig geöffnete Stellung erreicht ist,
**dadurch gekennzeichnet, dass** die Mittel zum Blockieren des Scharniers einen Vorsprung (53-4) des Nockenprofils umfassen, welcher dazu angeordnet ist, mit einer zweiten Kontaktzone (65-2, 66-2) des Abstützteils zusammenzuwirken, indem im Wesentlichen auf das Abstützteil eine Kraft (A2) ausgeübt wird, welche senkrecht zu dessen elastischer Translationsachse (T1-T1') verläuft, wobei der Vorsprung (53-4) des Nockenprofils mit der zweiten Kontaktzone (65-2, 66-2) des Abstützteils einen Anschlag für eine übermäßige Öffnung bildet.

2. Scharnier nach Anspruch 1, welches keinen hinteren Translationsanschlag umfasst, der auf das Abstützteil (65, 66) wirkt, wenn die übermäßig geöffnete Stellung erreicht ist.

3. Scharnier nach einem der Ansprüche 1 und 2, bei dem der Vorsprung (53-4) des Nockenprofils einen flachen Rand (53-4) aufweist, welcher mit der zweiten Kontaktzone (65-2, 66-2) des Abstützteils (65, 66) zusammenwirkt, wenn die übermäßig geöffnete Stellung erreicht ist.

4. Scharnier nach einem der Ansprüche 1 bis 3, bei dem das Abstützteil (65, 66) eine zylindrische Wand (65-2, 66-2) aufweist, welche mit dem Vorsprung (53-4) des Nockenprofils zusammenwirkt, wenn die übermäßig geöffnete Stellung erreicht ist.

5. Scharnier nach Anspruch 4, bei dem das Abstützteil (66) ein proximales Ende (66-1) mit kreisförmigem oder kugelförmigem Profil aufweist, welches die erste Kontaktzone bildet, welche mit dem Nockenprofil (53) zusammenwirkt, um dem Scharnier mindestens eine stabile Position zu verleihen.

6. Scharnier (41) nach einem der Ansprüche 1 bis 5, bei dem das Abstützteil (66) ein Kolben ist, welcher translatorisch in einem zylindrischen Hohlraum (64) montiert ist, der in dem zweiten Scharnierelement (60) gebildet ist.

7. Scharnier nach Anspruch 6, bei dem der Kolben ein erstes zylindrisches Teil (66-2) umfasst, dessen Ränder mit dem Vorsprung (53-4) des Nockenprofils zusammenwirken, um den Anschlag für eine übermäßige Öffnung zu bilden, und dessen Ende mit dem Nockenprofil zusammenwirkt, um dem Scharnier mindestens eine stabile Position zu verleihen.

8. Scharnier nach Anspruch 7, bei dem der Kolben ein zweites zylindrisches Teil (66-3) mit einem den Durchmesser (D1) des ersten zylindrischen Teils übersteigenden Durchmesser (D1') umfasst, welches mit den Wänden des zylindrischen Hohlraums (64) zusammenwirkt, um das Gleiten und das Einschließen des Kolbens sicherzustellen.

9. Scharnier nach einem der Ansprüche 6 bis 8, bei dem der Kolben durch einen Kolbenbolzen (66-4) verlängert wird, um den eine Feder mit Windungen (68) angeordnet ist, welche den Kolben zu dem Nockenprofil hin schiebt.

10. Scharnier nach einem der Ansprüche 6 bis 9, bei dem
- der in dem zweiten Scharnierelement (60) gebildete zylindrische Hohlraum (64) einen ersten Abschnitt (64-1) mit einem ersten Durchmesser (D2), welcher den Durchmesser (D1') des Kolbens übersteigt, und einen zweiten Abschnitt (64-2) mit einem zweiten Durchmesser (D3) aufweist, welcher geringer ist als der Durchmesser (D1') des Kolbens, wobei der Kolben gleitend in dem ersten Abschnitt (64-1) montiert ist und der zweite Abschnitt (64-2) an dem proximalen Ende des zweiten Scharnierelements (60) mündet, und
- das proximale Ende des zweiten Scharnierelements (60) mindestens einen Schlitz mit mindestens zwei Lippen (62, 63) umfasst.

11. Scharnier nach Anspruch 10, bei dem der erste Durchmesser (D2) und der zweite Durchmesser (D3) und die Längen der Lippen (62, 63) derart festgelegt sind, dass ein Vorgang zum Einsetzen des Kolbens in den ersten Abschnitt (64-1) durchgeführt werden kann, welcher den Schritt umfasst, bei dem der Kolben bei Spreizung der Lippen gezwungen wird, in den zweiten Abschnitt (64-2) einzudringen, und der Kolben bis zu dem ersten Abschnitt (64-1) geschoben wird, wobei der Kolben in dem ersten Abschnitt (64-1) eingeschlossen wird, wenn die Lippen (62, 63) ihren ursprünglichen Abstand wieder einnehmen.

12. Scharnier nach einem der Ansprüche 10 und 11, bei dem der Drehzapfen (45) die Lippen (62, 63) des zweiten Scharnierelements (60) durchquert.

13. Scharnier nach Anspruch 12, bei dem das erste Scharnierelement (50) ein verjüngtes proximales Ende (52) umfasst, welches das Nockenprofil trägt und zwischen den Lippen (62, 63) des zweiten Scharnierelements eingesetzt ist.

14. Scharnier nach einem der Ansprüche 1 bis 13, bei dem das Nockenprofil zwei Vertiefungen (53-1, 53-2) aufweist, um dem Scharnier durch Zusammenwirken mit der ersten Kontaktzone (65-1, 66-1) des Abstützteils zwei stabile Positionen zu verleihen.

15. Brillengestell mit einer Fassung und mindestens einem Bügel, **dadurch gekennzeichnet, dass** der Bügel an der Fassung mittels eines Scharniers (40, 41) nach einem der Ansprüche 1 bis 14 angelenkt ist, wobei das erste Scharnierelement (50) mit der Fassung und das zweite Scharnierelement (60) mit dem Bügel oder umgekehrt fest verbunden sind.

## Claims

1. An elastic hinge (40, 41), in particular for spectacle frames, comprising:
- two hinge elements (50, 60) rotatably mounted around a pivot (45),
- a cam profile (53) integral with the first hinge element (50),
- a bearing piece (65, 66) movably mounted in the second hinge element (60) according to an elastic translation axis (T1-T1'), having a first contact area (65-1, 66-1) for co-operating elastically with the cam profile (53) and for giving the hinge at least one stable position, and
- means for locking the hinge when a position of excessive opening is reached,
**characterised in that** the means for locking the hinge comprise an excrescence (53-4) of the cam profile arranged for co-operating with a second contact area (65-2, 66-2) of the bearing piece by exerting, essentially on the bearing piece, a force (A2) perpendicular to its elastic translation axis (T1-T1'), the excrescence (53-4) of the cam profile forming a stop against excessive opening with the second contact area (65-2, 66-2) of the bearing piece.

2. Hinge according to claim 1, not comprising any rear translation stop acting on the bearing piece (65, 66) when the position of excessive opening is reached.

3. Hinge according to one of claims 1 and 2, wherein the excrescence (53-4) of the cam profile has a flat edge (53-4) co-operating with the second contact area (65-2, 66-2) of the bearing piece (65, 66) when the position of excessive opening is reached.

4. Hinge according to one of claims 1 to 3, wherein the bearing piece (65, 66) has a cylindrical wall (65-2, 66-2) co-operating with the excrescence (53-4) of the cam profile when the position of excessive opening is reached.

5. Hinge according to claim 4, wherein the bearing piece (66) has a proximal end (66-1) of circular or spherical profile forming the first contact area that co-operates with the cam profile (53) to give the hinge at least one stable position.

6. Hinge (41) according to one of claims 1 to 5, wherein the bearing piece (66) is a piston translation-mounted in a cylindrical cavity (64) made in the second hinge element (60).

7. Hinge according to claim 6, wherein the piston comprises a first cylindrical part (66-2) the edges of which co-operate with the excrescence (53-4) of the cam profile to form the stop against excessive opening, and the end of which co-operates with the cam profile to give the hinge at least one stable position.

8. Hinge according to claim 7, wherein the piston comprises a second cylindrical part (66-3) of diameter (D1') greater than that (D1) of the first cylindrical part, which co-operates with the walls of the cylindrical cavity (64) to ensure the sliding and the trapping of the piston.

9. Hinge according to one of claims 6 to 8, wherein the piston is extended by a piston pin (66-4) around which a coil spring (68) is arranged that pushes the piston towards the cam profile.

10. Hinge according to one of claims 6 to 9, wherein:
- the cylindrical cavity (64) made in the second hinge element (60) has a first section (64-1) of a first diameter (D2) greater than that (D1') of the piston and a second section (64-2) of a second diameter (D3) smaller than that (D1') of the piston, the piston being slidably mounted in the first section (64-1), the second section (64-2) leading to the proximal end of the second hinge element (60), and
- the proximal end of the second hinge element (60) comprises at least one slit revealing at least two lips (62, 63).

11. Hinge according to claim 10, wherein the first (D2) and the second (D3) diameters and the lengths of the lips (62, 63) are determined so as to enable a method to be implemented for inserting the piston into the first section (64-1), comprising the step of forcing the piston to enter the second section (64-2) with parting of the lips, and pushing the piston up to the first section (64-1), the piston finding itself trapped in the first section (64-1) when the lips (62, 63) regain their initial parting.

12. Hinge according to one of claims 10 and 11, wherein the pivot (45) passes through the lips (62, 63) of the second hinge element (60).

13. Hinge according to claim 12, wherein the first hinge element (50) comprises a thin proximal end (52) that bears the cam profile and is housed between the lips (62, 63) of the second hinge element.

14. Hinge according to one of claims 1 to 13, wherein the cam profile has two hollows (53-1, 53-2) for giving the hinge two stable positions by co-operation with the first contact area (65-1, 66-1) of the bearing piece.

15. Spectacle frames comprising a frame and at least one arm, **characterised in that** the arm is connected to the frame by means of a hinge (40, 41) according to one of claims 1 to 14, the first hinge element (50) being integral with the frame and the second hinge element (60) integral with the arm, or vice-versa.
